Europäisches Patentamt

European Patent Office

Office européen des brevets

(11) Publication number: **0 246 770**
A2

# EUROPEAN PATENT APPLICATION

(21) Application number: **87303773.3**

(22) Date of filing: **28.04.87**

(51) Int. Cl.⁴: **B60T 13/74** , F16D 65/34

(30) Priority: **17.05.86 GB 8612061**
**12.12.86 GB 8629765**

(43) Date of publication of application:
**25.11.87 Bulletin 87/48**

(84) Designated Contracting States:
**CH DE ES FR IT LI**

(71) Applicant: **WESTINGHOUSE BRAKE AND
SIGNAL COMPANY LIMITED
Pew Hill
Chippenham Wiltshire(GB)**

(72) Inventor: **Wickham, David John
2 Monks Way Cricketts Meadow London
Road
Chippenham Wiltshire SN15 3TT(GB)**

(74) Representative: **MacFarlane, John Anthony
Christopher et al
PAGE & CO Temple Gate House Temple
Gate
Bristol BS1 6PL(GB)**

(54) **Force actuators.**

(57) A force actuator comprising an output member (1) movable from a first position to a second output-force-exerting position; first operating means (2) connected by a first transmission path (3) to the output member (1), and second operating means (20) connected by a second transmission path (23) to the output member (1); the ratio of the transmission paths, (3,23), the inertia of the respective transmission paths (3,23) and the operating means (2,20) connected thereto and the accelerating force capable of being generated by the respective operating means (2,20) and transmitted via the transmission path (2,23) connected thereby to the output member (1) all collectively being such that, with the output member (1) in its first position, simultaneous initiation of the operating means (2,20) causes the first operating means (2) to constitute the prime means by which the output member (1) is moved to its second position and, when in that second position, the second operating means (20) constitutes the prime means by which the output member (1) is caused to exert the output force.

FIG.1

## Force Actuators

This invention relates to force actuators and, more particularly although not exclusively, to such force actuators constituting railway-brake actuators.

One problem with force actuators - particularly, railway-brake actuators - is that whilst, on the one hand, the actuator is required to move its output-force-exerting output member a relatively large distance from its first "fully released" position to its second "applied" position in which it can exert the output force, when in that second position it must be capable of exerting what might be a very considerable output force. Thus, it is frequently necessary, adequately to fulfil both of these requirements, to provide two separate operating means, one to move the output member from its first position to its second position and the other to generate the required output force. It follows from the provision of these two separate operating means that a sophisticated control system is required sequentially to operate the first and second operating means. The system needs to have first means to initiate operation of the first operating means, second means to detect when the output member is in its second position and third means, upon such detection, then to initiate operation of the second operating means. Whilst such a sophisticated control system may be acceptable in normal operation of the actuator - "service" operation in the case of a railway-brake actuator - the very degree of the sophistication may be objectionable in required abnormal operation - "emergency" operation in the case of a railway-brake actuator - for, to minimise any chance of mal function, the system should be as simple as possible in this latter mode of operation.

A single operator is objectionable because, on the one hand, a "low rate" system is required for movement of the output member from its first to its second position to ensure rapid movement of the output member whilst, on the other hand, a "high rate" system is required to generate a sufficiently-high output force. Using a single operator would require an undesirably-massive operator for it to perform both functions.

The present invention seeks to obviate these problems by providing two operating means each with an attendant transmission path between it and the output member and then so designing the operating means and their respective transmission paths that, whilst the first operating means is the prime means for moving the output member from its first to its second position, the second operating means is the prime means by which the output force is generated when the output member is in its second position.

Accordingly, the present invention provides a force actuator comprising an output member movable from a first position to a second output-force-exerting position; first operating means connected by a first transmission path to the output member, and second operating means connected by a second transmission path to the output member; the ratio of the transmission paths, the inertia of the respective transmission paths and the operating means connected thereto and the accelerating force capable of being generated by the respective operating means and transmitted via the transmission path connected thereby to the output member all collectively being such that, with the output member in its first position, simultaneous initiation of the operating means causes the first operating means to constitute the prime means by which the output member is moved to its second position and, when in that second position, the second operating means constitutes the prime means by which the output member is caused to exert the output force.

Either or both of the operating means may be constituted by an electric motor.

The first transmission path may include a nut threadedly engaged with a screw-threaded portion of the output member, the nut being arranged for rotation by the first operating means. When the first operating means is an electric motor, this may be drivably connected to the nut via a gear train which may be in the form of a sprocket-and-chain system.

The second transmission path may include a nut threadedly engaged with a screw member and the second operating means may be drivably connected to the screw member by a gear train which may be in the form of a sprocket-and-chain system. The second transmission path may also include a lever pivotally connected to the nut threadedly engaged with the screw member. When the first transmission path includes a nut, the lever may be pivotally connected to a part axially located with respect to the nut of the first transmission path but with respect to which the nut of the first transmission path is rotatable.

Either or both of the operating means may be a spring but, when both are springs, the spring constituting the first operating mans is of a lower rate than the spring constituting the second operating means.

When both of the operating means are electric motors, the inertia of the respective transmission paths and the operating means connected thereto may be determined, inter alia, by electrical slugging of the second operating means.

Control means may be provided by which operation of the first and second operating means is controlled. These control means may be such that, selectively, initiation of operation of the first and second operating means is simultaneous or is sequential, in the latter case operation of the first operating means being initiated first and operating of the second operating means only being initiated after the output member has been detected as having reached its second output force-exerting position.

The force actuator may constitute a railway-brake actuator.

One embodiment of the present invention will now be described, by way of example only, with reference to the accompanying drawing of which:

Fig. I is a side elevation (partly sectioned) of the force actuator, and

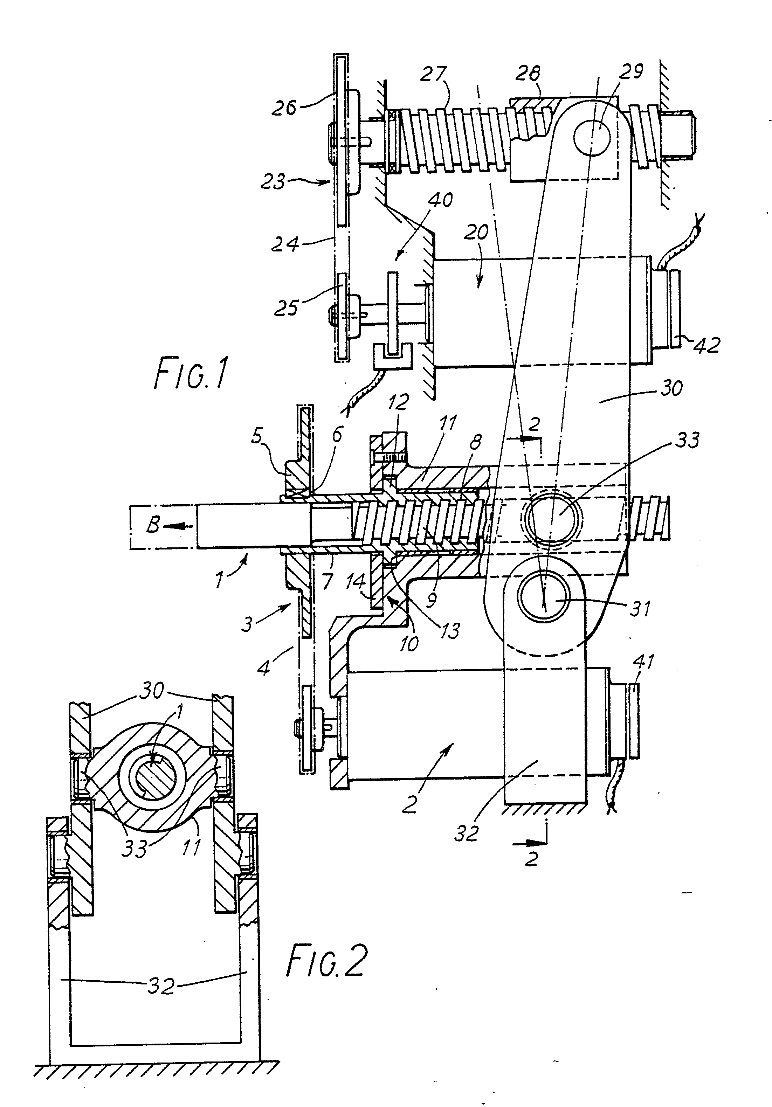

Fig. 2 is a section on the line "A" to "A" of Fig. I.

The actuator shown in the drawing is a railway-brake actuator although it will be appreciated that the concepts there embodied could equally well be used in other force actuators.

Referring to the accompanying drawing, the actuator comprises an output member I movable axially in the direction of arrow "B" from an inner first position (shown in full lines) to an outer second output-force-exerting position (shown in chain lines).

The output member I is so movable by first operating means (electric motor 2) operatively connected to the output member I by a transmission path 3. The transmission path 3 comprises a gear train in the form of a sprocket-and-chain system 4 of which the output sprocket 5 is keyed at 6 to the tubular extension 7 of a nut 8. The nut 8 is threadedly engaged with a screw-threaded portion 9 of the output member I. The electric motor 2 is mounted on a bracket IO within a tubular part II of which is rotatably mounted the nut 8 which is axially trapped in that part II by a collar I2 engaged in an annular recess I3 in the bracket IO and located therein by cover plate I4.

As so far described, it will be appreciated that operation of the motor 2 will, through the transmission path 3, rotate the nut 8 in the tubular part II thus causing the output member I to be driven from its first position to its second poition and, when in that second position, to generate a force on the output member I.

There is also provided second operating means (electric motor 2O) which is also operatively connected to the output member I via a second transmission path 23. This second transmission path 23 also includes a gear train in the form of a sprocket-and-chain system 24 of which the lower sprocket 25 is arranged to be driven by the electric motor 2O and the upper sprocket 26 is arranged to drive a screw member 27. The member 27 is threadedly engaged by a nut 28 to which is pivotally connected by pin 29 one end of a two-armed lever 3O fulcrumed at its lower end, by pin 3I to a pair of brackets 32 secured to land. Just above the fulcrum-pin 3I, the lever is pivotally connected by a further pin 33 to the tubular part II of the bracket IO.

It can thus be seen that operation of the electric motor 2O, through the transmission path 23, will move the bracket IO to the left, as viewed in Fig. I, thus carrying with it the output member I into its second position and, when the output member I is arrested in that position, will generate a force on the output member I.

However, in a force actuator such as that for a railway brake, the characteristics of the operating system for moving the output member to its force-exerting position is different from that of the operating system for generating the force to be exerted by the output member when it is in its force-exerting position. Hence, in the actuator above described, although the two electric motors 2 and 2O are of similar performance characteristics so that, of themselves, they are capable of generating similar acceleration forces, it can readily be seen that the first transmission path 3 provides a much lower ratio between the electric motor 2 and the output member I than does the second transmission path 23. Moreover, by virtue of the relatively high-mass lever 3O and by virtue of the mass of the electric motor 2, its bracket IO, and its sprocket-and-chain system 3 all being moved by the second electric motor 2O, the inertia of the electric motor 2O and its attendant transmission path 23 is substantially higher than that of the electric motor 2 and its attendant transmission path 3.

Hence, the above described actuator will operate as follows when with the output member I in its first position, operation of two electric motors 2 and 2O are initiated simultaneously:

Whilst the operation of the electric motors 2 and 2O will both contribute to movement of the output member I from its first position to its second position, because of the higher inertia in the second system incorporating the electric motor 2O and its transmission path 23 and the lower gear ratio of the transmission path 23, it will be the first system incorporating the electric motor 2 and the transmission path 3 which will by far be the prime contributor to the movement of the output member I. Conversely, once the output member I has reached its second position, because of the lower gear ratio of the transmission path 23, it will be the electric motor 2O which will by far be the prime contributor to the output force generated on the output member I.

Any suitable electrical control circuit may be used to control the operation of the electric motors 2 and 20 - in its simplest form, a simple on/off switch which controls the supply of current to both motors. In a railway-brake actuator, thus the simplest form of control can be provided for "emergency" operation. In "service" operation, the electric circuit may include means for controlling the extent of operation of the electric motor 20 (the electric motor 2 being allowed merely to stall once the output member 1 has reached its second position) so as, by this control, to effect a variable degree of operation of the electric motor 20 and, thus, a variable degree of brake application. To this end, the transmission path 23 may include an encoder 40 by which the extent of operation of the electric motor 20 is monitored and this information used to arrest further operation of the electric motor 20 when it has been operated to an extent to generate an output force sufficient to achieve the required degree of braking. However, for such "service" operation, a more sophisticated control circuit may be used. Such a circuit may, for "service" operation, provide for sequential operation of the motors 2 and 20; the motor 2 being the first to be operated to move the output member 1 from its first to its second position, detection of the output member 1 being in its second position (as, for example, by a strain gauge mounted on the output member 1 or in the transmission path 3) then initiating operation of the second electric motor 20 to generate the required output force. The electric motors 2 and 20 may incorporate electromagnetic brakes 41 and 42 respectively so that, for both motors they need not be held stalled when they have completed their respective function but can be held braked in position and operating power removed from them. Whilst such a control circuit is readily designable and will be obvious to those skilled in the art, they are relatively sophisticated and, whilst having benefit for "service" operation, are dangerously sophisticated for "emergency" operation as compared to the simple on/off switch advocated above for simultaneous operation of the two electric motors 2 and 20 in the "emergency" mode of operation.

The high inertial characteristic of the system incorporating the electric motor 20 and its attendant transmission path 23 could, of course, be further heightened if desired, by electrically slugging the electric motor 20.

Equally, the characteristics of the two electric motors might also be selected to be such that the motor 20 is capable of an accelerating force which is lower than that of the motor 2.

From the above, it can be seen that by suitable selection of the ratio of the transmission paths, the inertia (mechanical or electrical) of the respective transmission paths and the operating means (the electric motors 2 and 20) connected thereto and the accelerating force capable of being generated by the respective operating means, the degree of contribution made to the movement of the output member 1 by the respective electric motors 2 and 20 and the degree of contribution made to the output force by the respective electric motors 2 and 20 can be selected to that required for any particular force actuator. For a railway-brake actuator, of course, because of the very high output forces needed to be generated for maximum braking conditions, the selection would be such that the motor 20 makes a minimum contribution to the movement of the output member 1 whilst the motor 2 makes a minimum contribution to the output force generated.

Whilst in the above described embodiment, both operating means are shown and described as being electric motors (2 and 20) one or other or both of these operating means may take other forms such as, for example, springs.

**Claims**

1. A force actuator comprising an output member (1) movable from a first position to a second output-force-exerting position; first operating means (2) connected by a first transmission path (3) to the output member (1), and second operating means (20) connected by a second transmission path (23) to the output member (1); the ratio of the transmission paths (3, 23), the inertia of the respective transmission paths (3, 23) and the operating means (2,20) connected thereto and the accelerating force capable of being generated by the respective operating means (2, 20) and transmitted via the transmission path (3, 23) connected thereby to the output member (1) all collectively being such that, with the output member (1) in its first position, simultaneous initiation of the operating means (2, 20) causes the first operating means (2) to constitute the prime means by which the output member (1) is moved to its second position and, when in that second position, the second operating means (20) constitutes the prime means by which the output member (1) is caused to exert the output force.

2. An actuator as claimed in Claim 1, wherein the first transmission path (3) includes a nut (8) threadly engaged with a screw-threaded portion (9) of the output member (1), this nut (8) being arranged for rotation by the first operating means (2).

3. An actuator as claimed in Claim 1 or 2, wherein the second transmission path (23) includes a nut (28) threadly engaged with a screw member (27).

4. An actuator as claimed in Claim 1, 2 or 3 wherein one of other or both of the operating means is/are constituted by an electric motor (2 or/and 4).

5. An actuator as claimed in Claims 2 and 4, wherein the electric motor (2) constituting the first operating means is drivably connected to the nut (8) of the first transmission path via a gear train (4).

6. An actuator as claimed in Claims 3 and 4, wherein the electric motor (20) constituting the second operating means is drivably connected to the screw member (27) of the second transmission path via a gear train (24).

7. An actuator as claimed in Claim 5 or 6, wherein the gear train (4 or 24) of Claim 5 or 6 is a sprocket-and-chain system (4 or 24).

8. An actuator as claimed in Claim 3 or any. one of Claims 4, 6 or 7 as appendant to Claim 3, wherein the second transmission path (23) includes a lever (30) pivotally connected to the nut (28) that is threadly engaged with the screw member (27), and wherein the lever (28) is pivotally connected to. a part (11) axially located with respect to the nut (8) of the first transmission path (3) but with respect to which the nut (8) of the first transmission path (3) is rotatable.

9. An actuator as claimed in Claim 2, wherein both the operating means are constituted by electric motors (2, 4), and wherein the inertia of the respective transmission paths (3, 23) and the electric motors (2, 20) connected thereto is determined, inter alia, by electrical slugging of the electric motor (20) constituting the second operating means.

10. An actuator as claimed in Claim 1, wherein one or other or both of the first and second operating means (2, 20) is/are constituted by a spring.

11. An actuator as claimed in Claim 10, wherein both the operating means (2, 20) are constituted by springs, and wherein the spring constituting the first operating means (2) is of a lower rate than the spring constituting the second operating means (20).

12. An actuator as claimed in any one of the preceding Claims having control means by which operation of the first and second operating means (2, 20) is controlled, this control means being such that, selectively, initiation of operation of the first and second operating means (2, 20) is simultaneous or is sequential, in the latter case operation of the first operating means (2) being initiated first and operating of the second operating means (20) only being initiated after the output member has been detected as having reached its second output force-exerting position.

FIG.1

FIG.2